(19) Europäisches Patentamt
European Patent Office
Office européen des brevets

(11) EP 1 611 179 B1

(12) FASCICULE DE BREVET EUROPEEN

(45) Date de publication et mention de la délivrance du brevet:
**28.02.2007 Bulletin 2007/09**

(21) Numéro de dépôt: **04742460.1**

(22) Date de dépôt: **08.04.2004**

(51) Int Cl.:
***C08G 18/70*** (2006.01) ***C08G 18/08*** (2006.01)

(86) Numéro de dépôt international:
**PCT/FR2004/000873**

(87) Numéro de publication internationale:
**WO 2004/092243 (28.10.2004 Gazette 2004/44)**

# (54) COMPOSITIONS A BASE D'ISOCYANATE, LEUR UTILISATION POUR REALISER DES REVÊTEMENTS NOTAMMENT DES ADHESIFS ET JOINTS DE COLLE ALIPHATIQUE AINSI OBTENUS

ZUSAMMENSETZUNG AUS ISOCYANATEN, IHRE VERWENDUNG ZUR HERSTELLUNG VON KLEBSTOFFEN, UND DIE DAMIT HERGESTELLTEN AROMATISCHEN KLEBEFUGEN

COMPOSITIONS MADE FROM ISOCYANATES, USE THEREOF FOR THE PRODUCTION OF COATINGS IN PARTICULAR ADHESIVES AND ALIPHATIC GLUED JOINTS THUS OBTAINED

(84) Etats contractants désignés:
**AT BE BG CH CY CZ DE DK EE ES FI FR GB GR HU IE IT LI LU MC NL PL PT RO SE SI SK TR**

(30) Priorité: **08.04.2003 FR 0304342**

(43) Date de publication de la demande:
**04.01.2006 Bulletin 2006/01**

(73) Titulaire: **RHODIA CHIMIE**
**92512 Boulogne-Billancourt Cedex (FR)**

(72) Inventeurs:
- **GRANIER, Vincent**
  **F-69390 Vernaison (FR)**
- **VARRON, Corinne**
  **F-69003 Lyon (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
**WO-A-01/05861** **WO-A-99/07765**
**WO-A-99/10402** **WO-A-99/55756**
**FR-A- 2 745 577** **FR-A- 2 760 242**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 611 179 B1

## Description

La présente invention a pour objet des composés et des compositions à base d'isocyanate (qui peuvent être partiellement, voire totalement, masqués, mais cela n'est pas la mise en oeuvre préférée). Elle vise également leur procédé d'utilisation pour réaliser des revêtements, leur utilisation pour réaliser des adhésifs, notamment des joints de colle ainsi obtenus. Elle concerne plus particulièrement les compositions (auto)dispersables en phase aqueuse, notamment pour revêtir et notamment coller bois et élastomère.

Pour mieux comprendre l'invention il a paru opportun de faire les rappels suivants.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n% (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme :

$$\text{«I»} = (d_{90}-d_{10})/d_{50}$$

Dans leur grande majorité, les isocyanates étaient, jusqu'il y a peu, essentiellement dissous dans des solvants organiques. L'utilisation de solvants organiques est de plus en plus souvent critiquée par les autorités en charge de la sécurité du travail, car ces solvants, ou du moins certains d'entre eux, sont réputés toxiques ou chronotoxiques. C'est la raison pour laquelle on essaye de développer de plus en plus des techniques qui ne contiennent que peu de solvant, voire qui soient sans solvant. En particulier, pour pallier les inconvénients afférents aux solvants, on cherche des compositions complexes, parfois désignées sous le terme de système, qui puissent se substituer aux mélanges en milieu solvant.

En particulier, pour diminuer l'utilisation de solvant organique, dont la présence est réputée toxique pour ceux qui le manipulent et néfaste pour l'environnement, l'on a proposé de mettre au point des compositions isocyanates à la fois facilement émulsionnables et facilement utilisables en émulsion dans l'eau. L'eau sert dans ce cas de «véhicule» aux composants de la formulation et permet de réduire, voire de supprimer les solvants organiques nécessaires notamment à l'ajustement de la viscosité.

Pour ce qui est des isocyanates, les plus largement utilisés sont les diisocyanates notamment les alcoylènes diisocyanates (par exemple ceux vendus sous la marque Tolonate®) surtout sous la forme de leurs dérivés oligomériques tels que ceux à motif biuret, ceux à motif urétidinedione, ceux à motif(s) découlant des diverses trimérisations ou susceptibles d'en découler. On peut rappeler les divers motifs ou cycles susceptibles de se former à l'occasion de la trimérisation :

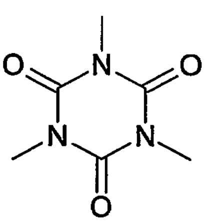

cycle isocyanurique

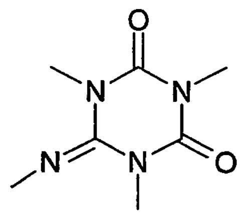

cycle 4,6-dioxo-2-imino-hexahydro-1,3,5-triazine

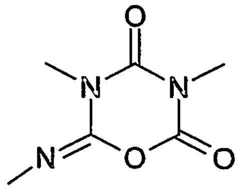

cycle iminooxadiazinedione

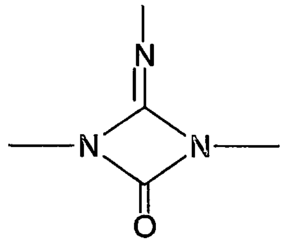

2-imino-4-oxo-1,3-diazétidine

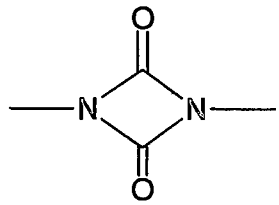

uretidine-dione

Quoique la présente invention puisse être utilisée dans d'autres domaines que celui du revêtement (notamment adhésifs, peintures et des vernis) dans la suite de la description, on utilisera son application dans les peintures et vernis pour mieux expliciter la problématique et servir le cas échéant d'exemple paradigmatique.

Pour mieux comprendre la portée de l'invention notamment dans l'activité des peintures et des vernis, il convient de faire quelques rappels relatifs aux techniques et aux systèmes utilisés pour réduire ou pour supprimer l'emploi de solvant organique.

Ainsi pour réaliser des films de peintures ou de vernis, on mélange d'une part une dispersion, ou une émulsion, contenant l'isocyanate et d'autre part une dispersion ou une solution de co-réactif di- ou poly-fonctionnel (en fonction porteuse d'hydrogène réactif, voir infra), en général des polyols. Compte tenu de la réactivité de la fonction isocyanate libre, les isocyanates sont le plus souvent masqués. Lorsque cela n'est pas le cas, le plus souvent, l'on met en émulsion les isocyanates libres dans la dispersion de coréactif.

Les pigments, les diverses charges et additifs sont le plus souvent présents ou introduits dans la phase aqueuse porteuse du coréactif (en général polyol) avant l'introduction de l'isocyanate ; mais ils peuvent être introduits après la formation de la double dispersion.

L'isocyanate peut être libre ou masqué et dans ce dernier cas totalement ou partiellement. La présente invention vise surtout le cas où une partie au moins, des fonctions isocyanates sont non masquées.

Un but annexe de la présente invention est de faciliter la dispersion des éventuels pigments et charges, et notamment du bioxyde de titane.

Une fois la dispersion finale complète, cette dernière est alors étalée sur un support sous forme d'un film à l'aide des techniques classiques de mise en oeuvre des revêtements industriels, notamment peintures et vernis.

Lorsque la préparation contient des isocyanates masqués, l'ensemble film plus support est cuit à une température suffisante pour assurer la libération des fonctions isocyanates et/ou la condensation de celles-ci avec des composés présentant des fonctions à hydrogène réactif bien connues de l'homme du métier (fonctions amine, sulfhydryle, alcool, autrement dit hydroxyle, ...), en général fonction hydroxyles, du coréactif. Il convient toutefois de rappeler que les produits masqués ou bloqués présentent un prix de revient significativement plus élevé que celui des produits non masqués.

Ainsi une des solutions les plus souvent proposées, réside dans l'utilisation de dispersions, notamment d'émulsions, dans l'eau. En raison de la réactivité de l'eau avec les isocyanates, cette solution est surtout utilisée pour les isocyanates masqués.

Bien entendu, ces problèmes doivent être résolus en respectant les contraintes intrinsèques aux revêtements.

Par exemple, pour ne pas tomber de Charybde en Scylla, un écueil majeur est à éviter, à savoir détériorer une ou plusieurs des qualités essentielles des revêtements (pour les peintures et vernis maintenir le caractère lisse et éviter le défaut qualifié de «peau d'orange", la dureté, la résistance aux solvants, l'adhérence sur tout support, etc.).

En particulier, il faut craindre une mauvaise adhérence du revêtement sur son support. En effet beaucoup de tensioactifs sont réputés altérer la solidité du lien entre le revêtement et son support et sont connus et utilisés pour défavoriser l'accrochage entre un polymère et un support. De tels phénomènes sont décrits notamment dans DE-OS 3.108.537.

Usuellement lorsque l'on utilise des isocyanates non ou incomplètement masqués, sous la forme d'émulsion aqueuse, la durée pendant laquelle ils sont utilisables reste inférieure à quelques heures, en général une ou deux heures. Il est important que l'emploi de nouveaux agents émulsifiants, ne se traduise par une durée de vie significativement moindre.

Aussi est-il important de ne pas rencontrer de difficulté lors de la mise en dispersion, notamment en émulsion des isocyanates.

La réglementation de divers pays et notamment de ceux de la communauté européenne est en train de bannir les synthons les plus utilisés et les plus efficaces dans les agents tensioactifs, à savoir les dérivés aromatiques. Parmi ces derniers sont notamment visés ceux qui comportent les radicaux désignés par «nonylphényle» et plus particulièrement les dérivés obtenus par condensation des époxydes, ou oxydes d'alcène, initiées par le nonylphénol.

Pour employer une tapinose, on peut mentionner que la mise au point de solutions de substitution n'est pas hyper aisée.

En ce qui concerne plus spécifiquement l'utilisation pour adhésifs il convient de rappeler quelques éléments de cette technique pour mieux comprendre l'invention. Pendant longtemps, comme pour les autres revêtements on a utilisé largement des solvants dans l'industrie des adhésifs, toutefois l'utilisation de solvants organiques est de plus en plus souvent critiquée par les autorités en charge de la sécurité du travail, car ces solvants, ou du moins certains d'être eux, sont réputés toxiques ou chronotoxiques.

C'est une des raisons pour laquelle on essaye de développer de plus en plus des techniques qui se substituent aux techniques en milieu solvant pour pallier les inconvénients afférents aux solvants.

Pour diminuer l'utilisation de solvant organique, dont la présence est réputée toxique pour ceux qui le manipulent et néfaste pour l'environnement l'on a proposé de mettre au point des adhésifs en phase aqueuse.

Dans leur grande majorité, ce type d'adhésifs est constitué de polymère(s), le plus souvent sous la forme de dispersion, dans une phase aqueuse dont l'évaporation provoque le collage.

Toutefois, il est apparu que les propriétés d'adhérence des joints de colle obtenus par cette sorte d'adhésif pouvaient être significativement accrue par la présence d'isocyanate dispersé dans ladite phase aqueuse. Le mécanisme de cette potentialisation n'est pas complètement élucidé.

Ainsi modifiée ces dispersions constituent une nouvelle classe d'adhésif, et sont formées d'une dispersion double dans la même phase aqueuse d'une part de polymère(s) (soluble ou le plus souvent en dispersion) et d'autre part d'isocyanate dispersé.

En général cette dispersion mixte est obtenue soit par le mélange de la phase aqueuse vectrice de polymère avec une émulsion d'isocyanate ; soit par la mise en émulsion directe de l'isocyanate dans la phase aqueuse porteuse du polymère.

C'est cette dernière technique qui est la plus désirée.

Malgré l'intérêt de cette technique, il y a peu de choix dans la palette des compositions à base d'isocyanate (s) aptes à cette utilisation et ce parce qu'ils doivent répondre à des contraintes variées et que choix des émulsifiants est critique.

Ainsi il faut que la technique de mise en émulsion de la composition isocyanate soit compatible avec le milieu vecteur du polymère pour éviter d'une part la réduction de la durée pendant laquelle la dispersion peut être utilisée pour le collage et d'autre part une démixtion avec éventuellement séparation de phase. Cela implique à la fois une stabilité physique des dispersions et d'autre part une certaine stabilité chimique.

En effet, usuellement lorsque l'on utilise des isocyanates non ou incomplètement masqués, sous la forme d'émulsion aqueuse, la durée pendant laquelle ils sont utilisables reste inférieure à quelques heures, en général une ou deux heures. Il est important d'éviter que l'emploi de nouveaux agents émulsifiant, ne se traduise par une durée de vie moindre.

Le problème est d'autant plus délicat que la diversité des polymères adhésifs utilisés est grande et que leurs caractéristiques dépendent du matériau dont la surface est à coller.

Enfin, il est fréquent que les joints de colle obtenus par adhésif en phase aqueuse, et notamment en dispersion, présentent une moindre adhérence en milieu humide.

En outre beaucoup de tensioactifs sont réputés altérer la solidité du lien entre le revêtement et son support. De ce fait ils sont connus et utilisés pour défavoriser l'accrochage entre un polymère et un support.

C'est pourquoi un des buts de la présente invention est de fournir une composition isocyanate qui puisse être aisément émulsifiée dans une grande palette de conditions.

Un autre but de la présente invention est de fournir une composition isocyanate qui puisse être aisément émulsifiée dans une grande palette de conditions sans faire appel à des émulsifiants présentant un noyau aromatique.

Un autre but de la présente invention est de procurer une composition isocyanate qui pallie les problèmes d'adhérence en milieu humide.

Un autre but de la présente invention est de procurer une composition isocyanate qui facilite l'adhésion et donne un revêtement (peinture, vernis,..) présentant une bonne adhérence sur des supports organiques notamment sur les (co)polymères de nature vinylique, (tels que acryliques, isoprèniques, et ou styrènique).

Un autre but de la présente invention est de procurer une composition isocyanate qui donne un revêtement (peinture, vernis,..) présentant une bonne adhérence sur des supports organiques élastomères tels que caoutchouc synthétique ou naturel.

Un autre but de la présente invention est de procurer une composition isocyanate qui donne un revêtement présentant une bonne adhérence sur des supports d'origine biologique et notamment le bois.

Un autre but de la présente invention est de procurer une composition isocyanate qui donne une peinture, et surtout un vernis, de qualité présentant une bonne qualité et notamment une bonne adhérence sur des supports directement d'origine biologique, tel que le bois ou ayant subi une transformation préalable tel que les panneaux de particules,

les contreplaqués, le papier, les caoutchoucs naturels.

Un autre but de la présente invention est de procurer un joint de colle raccordant au moins deux surfaces dont une au moins est d'origine biologique.

Un autre but de la présente invention est de procurer un joint de colle raccordant au moins deux surfaces dont une au moins est celle d'un matériau support organique, notamment celles de (co)polymères de nature vinylique, (tels que acryliques, isoprèniques, et ou styrènique).

Ces buts et d'autres qui apparaîtront par la suite sont atteints au moyen de l'utilisation dans les adhésifs d'une composition émulsionnable d'isocyanate comportant :

- une composition isocyanate a) d'une teneur massique en fonction N=C=O comprise entre 10% et 30% (bornes comprises), avantageusement de 15 à 25% (bornes comprises), d'une viscosité au plus égale à 2 500 mPa.s, avantageusement à 1 500 mPa.s, de préférence à 1 400 mPa.s, plus préférentiellement à 1 200 mPa.s d'une taille de particule $d_{50}$ d'un plus égale à 25 μm pour un indice de polydispersivité au plus égal à 1,5.
- un agent tensioactif comportant comme constituant principale un composé ou mélange de composés de formule générale (I) :

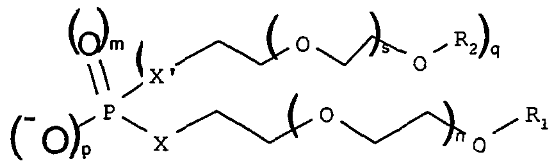

où :

- p représente un entier entre 1 et 2 (intervalles fermés c'est-à-dire comprenant les bornes) ;
  - m représente zéro ou avantageusement 1 ;
  - la somme p + m + q est au plus égale à trois ;
  - la somme 1 + p + 2m + q est égale à trois ou à cinq, avantageusement à 5 ;
  - X est un oxygène ou une liaison simple ;
  - X' est un oxygène ou une liaison simple ;
- n et s, identiques ou différents, représentent un entier choisi parmi ceux au moins égaux à 2, avantageusement à 3 ; de préférence à 4, plus préférentiellement à 5 et au plus égaux à 30, avantageusement à 25 ; de préférence à 20, plus préférentiellement à 9 ; ainsi les intervalles préférés sont entre 3 et 25, avantageusement entre 5 et 20, de préférence entre 5 et 9 (intervalles fermés c'est à dire comprenant les bornes) ;
- où $R_1$ et $R_2$, différents ou avantageusement identiques, sont choisis parmi les radicaux de nature aliphatique (c'est-à-dire que leur liaison ouverte est porté par un carbone d'hybridation $sp^3$ de 8 à 20 atomes de carbone) et sans noyau aromatique, éventuellement substitués, avantageusement des alcoyles en excluant les aralcoyles.

$R_1$ et $R_2$ représentent le plus souvent un alcoyle, éventuellement et avantageusement ramifié de 8 à 20 atomes de carbone. Il s'agit souvent de mélange d'alcoyle issu de mélanges d'alcools (en général un mélange d'isomères) tels que le produit vendu sous l'appellation d'alcool isotridécylique.

L'entier q représente donc un ou zéro.

Pour s et n un choix dans l'intervalle allant de 9 à 20 peut également être intéressant lorsque les co-cations sont très solubles (alcalins éventuellement séquestrés, ammoniums ou phosphoniums quaternaires, amines tertiaires de bas poids moléculaire, c'est-à-dire d'au plus 7 atomes de carbone), avantageusement l'un des X et X' est oxygène, de préférence les deux sont oxygène.

Il est préférable qu'en cas de mélange de composés de formule (I) la majorité d'entre eux en mole réponde à la formule (I) avec «q» valant zéro pour donner la formule (II) :

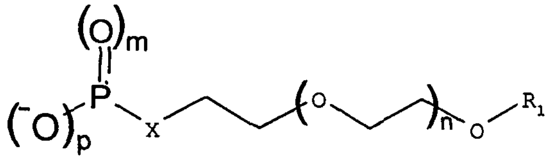

avec :

- «m» étant égal à zéro ou 1, de préférence 1
- «p» valant 2

Lorsque l'on utilise un mélange de composés, comme cela est préféré, les valeurs, qui sont des valeurs entières pour une molécule définie, deviennent des valeurs qui peuvent alors être fractionnaires.

Ainsi dans la formule (I) q, p (voire m mais cela n'est pas préféré en raison de difficulté de synthèse, des produits de deux synthèses différentes devant être mélangés : phosphite et phosphate) et surtout n et s deviennent des valeurs statistiques (en nombre bien que cela ne fasse guère de différence, le nombre de molécules de formule (I) pouvant alors aisément être déterminé par pHmétrie voir ci dessous).

Le rapport statistique diester sur monoester (c'est-à-dire q) est avantageusement au plus égal à 3/4, avantageusement à 2/3, de préférence à 1/2, et même moins (voir infra).

La composition émulsionnable devient alors une composition émulsionnable d'isocyanate comportant avantageusement :

- une composition isocyanate d'une teneur massique en fonction N=C=O comprise entre 15 et 25% d'une viscosité au plus égale à 2 500 mPa.s, avantageusement à 1 500 mPa.s, de préférence à plus 1 400 mPa.s, préférentiellement 1 200 mPa.s ;
- un agent tensioactif comportant comme constituant principal un composé ou un mélange de composés de formule générale moyenne :

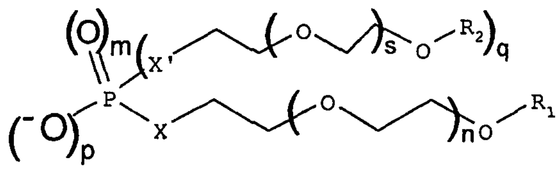

où :

- p représente une valeur entre 1 et 2 (intervalles fermés c'est-à-dire comprenant les bornes) ;
- m représente zéro ou 1, avantageusement 1 ;
- la somme p+m+q est égale à 3 ;
- la somme 1+p+2m+q est égale à la valence du phosphore c'est-à-dire à 3 ou à 5, avantageusement à 5 ;
- X est un oxygène ;
- X' est un oxygène ;
- n et s ont avantageusement la même valeur statistique n et s, identiques ou différents, représentent une valeur statistique choisie parmi celles au moins égales à 2, avantageusement à 3 ; de préférence à 4, plus préférentiellement à 5 et au plus égales à 30, avantageusement à 25 ; de préférence à 20, plus préférentiellement à 9 ; ainsi les intervalles préférés sont entre 3 et 25, avantageusement entre 5 et 20, de préférence entre 5 et 9 (intervalles fermés c'est à dire comprenant les bornes) ;
- où $R_1$ et $R_2$, différents ou avantageusement identiques, sont choisis parmi les radicaux de nature aliphatiquesans noyau aromatique, éventuellement substitués, avantageusement des alcoyles.

La valeur q représente une valeur choisie dans l'intervalle fermé allant de 0 à 1.

Pour s et n, un choix dans l'intervalle allant de 9 à 20 peut également être intéressant lorsque les co-cations sont très solubles (alcalins éventuellement séquestrés, ammoniums ou phosphoniums quaternaires, amines tertiaires de bas poids moléculaire, c'est-à-dire d'au plus 7 atomes de carbone) ; alcoyle est pris dans son sens étymologique

d'un alcool dont on a enlevé une fonction OH. $R_1$ et $R_2$ représentent le plus souvent un alcoyle, éventuellement et avantageusement ramifié, allant de 8 à 20 atomes de carbone (valeur entière ou statistique), de préférence de 10 à 15 atomes de carbones, plus préférentiellement ne comportant que de l'hydrogène et du carbone il est souhaitable que $R_1$ et même $R_2$ soit alkyle au sens de l'IUPAC, c'est-à-dire correspondent à un alcane, éventuellement cyclique, auquel on à enlevé un hydrogène.

Il est à noter que le rapport statistique «q», qui est choisi dans l'intervalle fermé allant de 0 à 1, est aisément déterminé par dosage acido-basique.

Il est souhaitable, alors, que «q» statistique soit au plus égal à 0,5, avantageusement à 0,3, de préférence à 0,2.

Dans ce cas, la formule moyenne est en nombre (nombre total de chaque type de motifs ou d'atomes divisés par le nombre de molécules), les proportions de chaque molécule étant mesurées par chromatographie liquide, le cas échéant, pour les molécules lourdes par perméation de gel.

Ces composés sont susceptibles d'être obtenus par estérification partielle d'acides phosphorés, avantageusement phosphorique par des polyoxydes d'éthylène (à s et n motif) terminé par une fonction alcool et commencé par un alcool ($R_1$ et/ou $R_2$).

Le rapport massique entre d'une part lesdits composés de formule (I) (numérateur) et d'autre part les isocyanates à mettre en suspension, est le plus souvent au plus égal à environ 0,1, avantageusement à 0,10. Dans la présente description, le terme»environ»est employé uniquement pour mettre en exergue le fait que les valeurs données correspondent à un arrondi mathématique et que, lorsque le, ou les, chiffres les plus à droite d'un nombre sont des zéros, ces zéros sont des zéros de position et non des chiffres significatifs, sauf, bien entendu, s'il en est précisé autrement.

Le rapport massique entre les composés de formule (I) (numérateur) et les isocyanates à mettre en suspension (dénominateur) est avantageusement supérieur à 1%, de préférence à 2%.

Le caractère autoémulsionnable qui constitue un avantage dans ces utilisations apparaît à partir d'un rapport massique d'environ 3% en présence composé émulsifiant d'autres types (eux-mêmes en quantité au moins égale à 3%) et d'environ cinq pour cent lorsque les composé de formule (I) représente au moins 90% en masse de l'ensemble des tensioactifs utilisés comme émulsifiant.

Les co-réactifs utilisés avec l'isocyanate selon l'invention sont souvent mis sur le marché avec leur propre agents tensioactifs, en sorte que lorsque l'on met la composition isocyanate de l'invention en émulsion dans la phase aqueuse du co-réactif, il peut y avoir auto émulsion alors que la quantité d'agent tensioactif de formule (I) est insuffisante pour assurer l'auto émulsion dans de l'eau pure.selon la présente invention. Cette compatibilité avec les tensioactifs utilisés avec les polyols présente un grand intérêt pour la mise en oeuvre de l'invention.

Il est également souhaitable que la quantité dudit ou desdits composés de formule (I) corresponde à une valeur comprise entre $10^{-2}$ et 1, avantageusement entre $5.10^{-2}$ et 0,5 atome de phosphore par litre.

Ainsi le rapport massique entre d'une part les composés de formule (I) (numérateur) et d'autre part les isocyanates à mettre en suspension (dénominateur), est avantageusement au moins égal à 2%, de préférence à 4%, et au plus égal à environ 15%, de préférence à 10%, ainsi ce rapport massique est avantageusement compris entre environ 2 et 15%, de préférence entre environ 4% et 10% (2 chiffres significatifs) ; ces intervalles sont fermés c'est-à-dire qu'ils contiennent les bornes).

Selon la présente invention, lesdits composés peuvent être utilisés seuls, ou en mélange, avec un ou plusieurs agents tensioactifs.

Ces éventuels agents tensioactifs peuvent également être choisis parmi d'autres composés ioniques [notamment sulfate ou phosphate d'alcoyle(s) les alcoyl-phosphonate, -phosphinate, sulfonate, sel d'acide gras et/ou zwitterionique] et parmi les composés non-ioniques ceux bloqués en bout de chaîne ou non. Toutefois les composés non ioniques présentant des fonctions alcooliques sur au moins l'une des chaînes semblent avoir un effet légèrement défavorable sur l'(auto)émulsion même s'ils ont un effet favorable sur d'autres aspects de la composition ; compte tenu de cela il est préférable que la teneur en ce type de composé représente au plus 1/3, avantageusement au plus 1/5, de préférence au plus un dixième en masse desdits composés anioniques selon l'invention.

Le contre-cation (ou les contre-cations) assurant la neutralité électrique des composés tensioactifs (tels ceux de formule (I)) visé par la présente l'invention est avantageusement monovalent et est choisi parmi les cations minéraux et les cations organiques avantageusement non-nucléophiles et par voie de conséquence de nature quaternaire ou tertiaire [notamment «oniums» de colonne V, tels que phosphoniums, ammoniums (y compris amines protonées), voire de colonne VI, tel que sulfonium, ...] et leurs mélanges, le plus souvent ammoniums, en général issus d'une amine, avantageusement tertiaire. Avantageusement, on évite que le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes.

Le pKa dans l'eau des cations issu de la protonation des bases neutres (organique [ammonium, ...] ou minéraux) est avantageusement au moins égal à 7, de préférence à 8 et au plus égal à 14, de préférence à 12, plus préférentiellement à 10.

Les cations et notamment les amines correspondant aux ammoniums (amines protonées dans ce cas) ne présentent avantageusement pas de propriété tensioactive mais Il est souhaitable qu'elles présentent une bonne solubilité en tout cas suffisante pour assurer celle desdits composés présentant groupement fonctionnel et une chaîne polyoxygénée, en phase aqueuse et ce, à la concentration d'emploi.

Les amines tertiaires, les ammoniums ou phosphoniums quaternaires présentant au plus 16, avantageusement 12 atomes, de préférence au plus 10 atomes, plus préférentiellement au plus 8 atomes de carbone par fonction «onium» (bien évidemment y compris les ammoniums issus d'une amine tertiaire par protonation) sont préférés ; rappelons qu'il est préféré qu'il n'y ait qu'une fonction par molécule.

Les amines tertiaires, les ammoniums ou phosphoniums quaternaires présentant au moins 4, avantageusement au moins 5 atomes, de préférence au moins 6 atomes, plus préférentiellement au moins 7 atomes de carbone par fonction «onium» (bien évidemment y compris les ammoniums issus d'une amine tertiaire par protonation) sont préférés.

Selon ce qui précède, il apparaît que les bases préférées sont des mono amines, voire les monophosphines, tertiaires présentant de 6 à 10 atomes de carbones, avantageusement de 7 ou 8 atomes de carbone.

Selon la présente invention, il est préféré que l'un des substituants de l'azote, ou du phosphore, soit un radical secondaire, voire tertiaire, avantageusement un cycloalcoyle d'au plus 7 chaînons, avantageusement de 5 ou 6 chaînons.

Les amines peuvent comporter d'autre fonction et notamment les fonctions correspondant aux fonctions des acides aminés et des fonctions éthers cycliques comme la N-méthylmorpholine, ou non. Ces autres fonctions sont avantageusement sous une forme qui ne réagisse pas avec les fonctions isocyanates et n'altèrent significativement pas la solubilité en phase aqueuse.

Il est très souhaitable que les composés anioniques selon la présente invention soient sous une forme neutralisée telle que le pH qu'elle induit lors d'une dissolution ou d'une mise en contact dans l'eau soit compris au moins égal à 3, avantageusement à 4, de préférence à 5 et au plus égal à 12, avantageusement à 11, de préférence à 10.

Ainsi il est préférable que seules les fonctions acides fortes ou moyennes (c'est-à-dire dont le pKa est au plus égal à 4) soit neutralisée quand il y en a plus d'une. Les acidités faibles, c'est-à-dire dont le pKa est au moins égal à 5, peuvent être partiellement neutralisées.

Comme cela à été mentionné précédemment d'une manière plus générale il est préférable que les composés ou»q»est égal 0 soient largement majoritaires. Ainsi lorsque le phosphore est un phosphore V (c'est-à-dire 2m + p + q = 5) et que les composés du mélange sont esters, il est souhaitable d'utiliser des mélanges de monoester(s) et de diester(s) dans un rapport molaire monoester(s)/diester(s) supérieur à 2, avantageusement à 3, de préférence à 4, plus préférentiellement à 5, voire à 10.

Les agents émulsifiants selon l'invention, notamment les mélanges ci-dessus, peuvent en outre comporter de 1% jusqu'environ 20% (il est toutefois préférable que cela ne dépasse pas environ 10%) en masse d'acide phosphorique et/ou acide phosphoreux (qui seront avantageusement salifié au moins en partie de manière à être dans les zones de pH préconisées) et de 0 à 5% d'esters de l'acide pyrophosphorique. Si techniquement la présence d'acide phosphoreux est possible, certains de ses dérivés sont réputés toxiques, il est donc aviser d'éviter cet acide, surtout dans les cas où il risque de se former des dérivés réputés toxiques.

La composition peut comporter en outre un catalyseur avantageusement latent (libérable par action des agents extérieurs, par exemple rayonnement visible ou U.V., oxygène).

Selon la présente invention, il est possible de réaliser aisément une émulsion et notamment une émulsion huile dans eau stable.

Il est certes possible d'obtenir une émulsion eau dans huile, mais une telle émulsion n'est chimiquement pas stable les émulsions eau dans huile favorisant une décomposition dangereuse parce que parfois brutale des fonctions isocyanates. Pour éviter ce problème il est avisé de faire l'addition de la composition isocyanate selon l'invention dans la phase aqueuse et non l'inverse.

Les phases aqueuses porteuses des polymères adhésifs présente souvent une propriété tensioactive non négligeable. Ainsi il n'est pas rare que la composition émulsionnable d'isocyanate soit auto-émulsionnable dans la phase aqueuse porteuse du, ou des, polymères adhésif(s), tandis qu'elle ne l'est pas dans de l'eau pure.

Ainsi, lorsque la concentration en agent tensioactif est basse, il peut arriver qu'il y ait une démixtion en deux dispersions (en général des émulsions) : l'une»huile dans eau»surmontée de l'autre qui est»eau dans huile». Comme cela a été mentionné précédemment et sera développé ultérieurement, cette dernière est souvent chimiquement instable avec dégagement de gaz carbonique (bioxyde de carbone) dû à l'hydrolyse de fonction isocyanate par l'eau. Cette situation peut être palliée par une agitation plus vigoureuse ou mieux par l'augmentation de la teneur en agent émulsifiant.

La teneur de composition isocyanate dans la dispersion finale varie de 1 à environ 20%, avantageusement de 2 à 15%, de préférence de 3 à 10%, (intervalles fermés c'est-à-dire contenant les bornes).

Il est souhaitable que la composition d'isocyanate selon l'invention après mise en dispersion ou émulsion dans une phase aqueuse, présente une teneur en eau d'au plus 95% avantageusement d'au plus 90%, de préférence d'au plus 85% et d'au moins 25%, avantageusement d'au moins 30%, de préférence au moins 35%. Il est ainsi possible d'obtenir des émulsions riches en matière solide.

La dispersion prête à l'emploi comporte outre la phase aqueuse et la phase isocyanate dispersée dans ladite phase aqueuse, les poly ou oligomères porteurs de fonction à hydrogène mobile. L'invention est particulièrement bien adaptée aux polyuréthane porteurs fonction à hydrogène mobile et aux alcool polyacrylique. Lors de l'utilisation des compositions selon la présent invention pour potentialiser l'adhésion puis l'adhérence, les teneurs en fonction(s) à hydrogène mobile (c'est-à-dire réactive avec la fonction isocyanate) est en générale faible (plus précisément pour 100 g de matière sèche allant de 5 milliéquivalents à 90 milliéquivalents, avantageusement de 10 à 60, de préférence de 20 à 50 milliéquivalents de fonction(s) à hydrogène mobile avantageusement alcool) ; pour les autres types de revêtement (peintures et vernis), la teneur est plus élevée plus qu'elle va en général de 10 milliéquivalents aux 100 g à 400 milliéquivalents aux 100 g, avantageusement de 20 à 300, de préférence de 30 à 200 milliéquivalents pour 100 g de matière sèche, plus préférentiellement de 50 à 150. La fonctionnalité (calculée à partir de $M_n$) va en général de 3 à 12, le plus souvent de 5 à 10. La masse moléculaire Mn varie en générale de 1 000 à 10 000, avantageusement de 2 000 à 6 000.

On peut donner la description de polyol particulièrement bien adapté au peinture et/ou vernis selon la présente invention :

Lorsqu'on utilise un polyol de nature acrylique, on préfère que celui-ci réponde aux conditions suivantes pour un extrait sec (ES) compris entre 75 à 80%, en poids.

- Mw (poids moléculaire moyen en poids) non supérieur à 10 000, avantageusement non supérieur à 5 000.
  On préfère Mw inférieur à 10 000 avantageusement inférieur à 5 000.
  Mw est avantageusement au moins égal à 800, de préférence à 1 500.
- Mn (poids moléculaire moyen en nombre) est à 5 000, avantageusement au plus égal à 3 000.
  On préfère Mn inférieur à 5 000, avantageusement inférieur à 3 000.
- Mw/Mn (rapport de dispersité) non supérieur à 5, avantageusement non supérieur à 3, de préférence non supérieur à 2.

On préfère Mw/Mn inférieur à 5, avantageusement inférieur à 3, de préférence inférieur à 2. Ce rapport est en général au moins égal 1.

Pour plus de détail, on peut se rapporter à la norme ASTM-E222.

Les Mn et Mw sont obtenus avantageusement par chromatographie d'exclusion perméation sur gel en prenant le styrène comme étalon.

On préfère des polyols obtenus par polymérisation d'hydroxyalcoyl(méth)acrylates, notamment hydroxyéthyl (méth)acrylate et hydroxypropyl (méth)acrylates.

Pour les peintures et vernis sur bois on utilise les polyol acryliques ou polyuréthannes de teneur en fonction alcool (masse de 17) de 0,1 à 4% en masse, de préférence allant de 0,5 à 3%, de masse moléculaire Mn au moins égale à 2 000, de préférence à 3 000 et avantageusement au plus égale à 10 000.

La teneur en solvant représente avantageusement au plus 20% en masse, de préférence au plus 10%, plus préférentiellement au plus 5% et même moins de 1 % de la dispersion finale (c'est-à-dire prête à l'emploi pour coller).

Les émulsions de peintures et surtout vernis selon la présente invention présentent des propriétés significativement améliorées en ce qui concerne la qualité du revêtement. : remarquable adhésion, résistance au solvant polaire et aux acides améliorés, résistance accrue aux taches d'origine alimentaire (moutarde, café) dont le nettoyage constitue une des tâches ménagères les plus fastidieuses et délicates.

Selon une mise en oeuvre particulièrement avantageuse de la présente invention, après mise en dispersion ou émulsion de la composition isocyanate, la somme des constituants du liant (c'est-à-dire des teneurs en masse du, ou des, isocyanates, des émulsifiants et de polymère(s) [avantageusement à fonction(s) porteuse(s) d'hydrogène réactif avec les fonctions isocyanates, notamment polyols]), dans l'eau varie de 20%, de préférence de 30%, à 60%, de préférence 50% par rapport à la totalité de la composition.

En particulier le taux de matière solide peut atteindre des valeurs au moins égale à 40%, et même à 50%, voire 60%, mais il est en général inférieur à 80%.

Pour revenir au problème de mise en émulsion, au cours de l'étude qui a mené à la présente invention, en particulier dans le cas des isocyanates aliphatiques (c'est-à-dire reliés au squelette hydrocarboné, c'est-à-dire contenant à la fois de l'hydrogène et du carbone) par l'intermédiaire d'un carbone saturé ($sp^3$). Il a été montré qu'il y avait un risque d'emballement de diverses réactions lorsque certaines proportions d'eau étaient atteintes. Aussi est-il avisé d'éviter des compositions où le rapport massique entre, d'une part la quantité d'eau dans la phase aqueuse, et d'autre part la somme de l'isocyanate et du tensioactif selon l'invention, est compris entre $10^{-2}$ et 1/5 (0,5). Si l'on désire plus de sûreté on évitera les rapports compris entre $10^{-3}$ et 1. Pour empêcher tout passage dans cette zone dangereuse, il est conseillé de réaliser l'émulsion en ajoutant la composition émulsionnable d'isocyanate dans la phase aqueuse et non l'inverse.

Il est préférable d'utiliser des compositions isocyanate d'une viscosité au plus égale à 1 500 mPa.s, avantageusement à 1 200 mPa.s, de préférence 1 000 mPa.s.

Au cours de l'étude qui a mené à la présente invention il a été montré que la taille (la granulométrie) des

émulsions jouait un grand rôle dans la qualité de l'adhérence finale. Plus particulièrement, est importante la polydispersité de l'émulsion de la composition isocyanate lorsque cette dernière est seule et lorsqu'elle est avec le polymère adhésif

Ainsi l'isocyanate seul aura une taille de particule $d_{50}$ au plus égale à 25, de préférence à 22 $\mu$m pour un indice de polydispersité au plus égal à 1,5 avantageusement à 1,3 de préférence à 1,1.

Dans le cas où l'on disperse l'isocyanate (ou plus précisément la composition émulsionnable d'isocyanate) dans la phase du polymère, la monodispersité est plus difficile à atteindre, mais les résultats des composés selon l'invention constitue un progrès significatif.

Les isocyanates visés par l'invention comporte notamment les composés détaillés ci après.

Ces composés peuvent avantageusement contenir les structures connues dans ce domaine, par exemple les «prépolymères» issus de la condensation de polyol (par exemple triméthylol propane) en général triol (avantageusement primaire) et surtout les plus courantes, à savoir les oligomères tels à motifs isocyanurates (encore appelé trimère), ceux à structure urétidinedione (encore appelé dimère), des structures biuret ou allophanate ou une combinaison de ce type de structures sur une seule molécule ou en mélange.

Si l'on désire abaisser fortement la teneur en solvant de la composition, notamment lorsqu'elle est sous forme d'émulsion, il est préférable d'utiliser des mélanges de ce type naturellement (c'est-à-dire sans adjonction de solvant) de basse viscosité.

Les composés présentant cette propriété sont surtout les dérivés (type isocyanurate, encore appelée trimère, des structures urétidinedione, encore appelée dimère, des structures biuret ou allophanate ou une combinaison de ce type de structures sur une seule molécule ou en mélange) en partie et/ou en totalité des isocyanates aliphatiques dont les fonctions isocyanate sont reliées au squelette par l'intermédiaire de fragments éthylène [par exemple des polyméthylènediisocyanates, notamment l'hexaméthylènediisocyanate et ceux des arylènedialcoylènediisocyanates dont la fonction isocyanate est distante des noyaux aromatique d'au moins deux carbones tels que (OCN-$[CH_2]_t$-Φ-$[CH_2]_u$ NCO) avec t et u supérieur à 1].

Ainsi on utilise avantageusement des compositions isocyanates a) qui comportent au moins 50%, avantageusement 70%, en masse d'oligomères choisis parmi les hétéro- ou homo-oligomères dont au moins un des monomères est un monomère aliphatique, avantageusement dont tous les monomères sont des monomères aliphatiques choisis parmi ceux porteurs d'au moins deux fonctions isocyanates et dont le squelette, sur le trajet le plus court joignant deux fonctions isocyanates comportent au moins un enchaînement polyméthylène d'au moins deux maillons méthylène $(CH_2)_\pi$ ($\pi \geq 2$), exocyclique lorsque le monomère comporte un cycle.

On considère comme oligomères les composés présentant une masse d'au plus environ 1 600, soit pour l'hexaméthylène diisocyanate, environ au plus 10 motifs diamines précurseurs de fonctions isocyanates. Dans ledit enchaînement polyméthylène d'au moins deux maillons méthylène $(CH_2)_\pi$, $\pi$ représente un entier de 2 à 10, avantageusement de 4 à 8. Lesdits oligomères sont avantageusement choisis parmi les homo-oligomères d'hexaméthylène diisocyanate.

Ces composés ou mélanges ont avantageusement une viscosité au plus égale à environ 2 000 centipoises (ou milliPascal.seconde), de préférence à environ 1 500 centipoises (ou millipascal.seconde).

Lorsque ces valeurs ne sont pas atteintes, il est alors souvent utile d'amener le mélange à ces valeurs de viscosité par l'adjonction d'une quantité minimale de solvant(s) approprié(s). Lorsque l'on n'utilise pas des solvants réactifs (voir infra), il est toutefois préférable que la quantité de solvant dans la composition isocyanate ne dépasse pas 20% en masse de la composition émulsionnable d'isocyanate, avantageusement 10%.

Lorsque cela est compatible avec l'application, les solvants les plus appropriés sont ce qu'il convient d'appeler des solvants réactifs (car ils ont ces deux caractéristiques).

Comme solvants réactifs, on peut citer les monomères aliphatiques di- et tri-isocyanate, voire tétra-isocyanate de masse moléculaire au moins égale à 200 (2 chiffres significatifs), avantageusement à 250, de viscosité au plus égale à 500 mPa.s. Parmi ce type de solvant on peut mentionner ceux dérivés d'ester de acides diaminés, tels la lysine et l'ornithine, et notamment le LDI (Lysine Di-Isocyanate, issu d'ester de la lysine), LTI (Lysine Tri-Isocyanate, issu de l'ester de la lysine avec l'éthanolamine), et les alcanes trisubstitués tels le NTI (NonylTri-Isocyanate OCN-$(CH_2)_4$-CH ($CH_2$-NCO)-$(CH_2)_3$-NCO) l'UTI (Undécyle Tri-Isocyanate OCN-$(CH_2)_5$-CH(-NCO)-$(CH_2)_5$-NCO).quoique non développés à l'échelle industrielle les tétra-isocyanates issus d'esters double de diols [tels que glycols, propanediols (notamment le 1,3), butanediols (notamment le 1,4), pentanediols, (notamment le 1,5)] d'acides diaminés donnent de bons résultats.

Comme solvants réactifs, on peut également citer les dimères de polyméthylène di-isocyanate éventuellement substitué sur un méthylène par un éthyle ou un méthyle (à cycle urétidinedione), les bis-dimères (trimères à deux cycles urétidinediones), et leurs mélanges entre eux et, le cas échéant, avec les trisdimères (tétramère à trois cycles urétidinediones). De tels mélanges peuvent être faits par chauffage des monomères (voir demande de brevet internationale publiée sous le N° WO99/07765).

Comme solvants réactifs, on peut également citer les monoallophanates de polyméthylènedi-isocyanate éventuellement substitué sur un méthylène par un éthyle ou un méthyle (dicondensat avec un monoalcool), les deux sortes de bis-allophanates (tétracondensat avec un diol, ou de préférence tricondensat avec deux mono alcool à deux fonctions allophanates), et leurs mélanges entre deux ou les trois espèces spécifiées. Pour la synthèse de ce type de produit l'on

peut se référer à la demande de brevet internationale publiée sous le N° WO 99/55756.

On peut bien évidemment utiliser des mélanges des divers types de solvant réactifs ci dessus.

En d'autres termes on peut ajuster la viscosité de la composition isocyanate avant mélange avec l'agent d'émulsification à une valeur de au plus égale à environ 2 500 centipoises (ou mPa.s c'est-à-dire milliPascal.seconde), avantageusement à 2 000 mPa.s, de préférence à environ 1 500 centipoises (ou milliPascal.seconde), plus préférentiellement 1 200, encore plus préférentiellement 1 000 mPa.s, en ajoutant au moins un des composés ci-dessus, à savoir en réalisant un coupage avec une composition isocyanate de viscosité au plus égale à 1 200 mPa.s et inférieure à la viscosité désirée (c'est-à-dire respectivement 3 000, 2 000, 1 500 et 1 000 mPa.s), avantageusement choisie parmi :

■ celles comportant au moins 10% en masse d'au moins un monomère aliphatique di- et poly-isocyanate de masse moléculaire supérieure à 200, avantageusement à 250, de viscosité au plus égale à 500 mPa.s ;

■ celles comportant au moins 10% en masse d'au moins un dérivé à cycle urétidinedione choisi parmi les dimères et les bis-dimères de polyméthylène di-isocyanate éventuellement substitué sur un méthylène par un éthyle ou un méthyle, de viscosité au plus égale à 500 mPa.s ;

■ celles comportant au moins 10% en masse d'au moins un allophanate choisi parmi les monoallophanate de polyméthylènedi-isocyanate éventuellement substitué sur un méthylène par un éthyle ou un méthyle, de viscosité au plus égale à 500 mPa.s ;

■ celles formées par le mélange des trois types de compositions ci dessus, de viscosité au plus égale à 500 mPa.s.

Ainsi que déjà mentionnés ci-dessus, les isocyanates concernés peuvent être des mono-, di-, voire poly-isocyanates. Avantageusement, ces dérivés peuvent contenir des structures de type isocyanurate, encore appelées trimères, des structures urétidinediones, encore appelées dimères, des structures biurets ou allophanates ou une combinaison de ce type de structures sur une seule molécule ou en mélange. Il convient de souligner que les monomères trifonctionnel tels le LTI (Lysine TriIsocyanate) et le NTI (NonylTri-Isocyanate) sont la plupart du temps utilisés tels quel, mais peuvent être oligomérisés.

Les isocyanates monomères sont issus en général de diamines transformées en diisocyanate par carbonatation ; cette opération est dans la grande majorité des cas réalisée par l'action du phosgène ou des réactifs équivalents ; on retrouve bien évidemment les motifs diamine dans les composés issus de l'oligocondensation (par exemple dimères, trimères, allophanates, uréthannes, urées et biuret, ...). Ces monomères peuvent être notamment :

⇒ aliphatiques, y compris cycloaliphatiques et arylaliphatiques, tels que :

- comme aliphatique simples, les polyméthylènediisocyanates monomères qui présentent des enchaînements polyméthylène $(CH_2)_\pi$ $\pi$ où $\pi\pi$ représente un entier de 2 à 10, avantageusement de 4 à 8 et notamment l'hexaméthylène diisocyanate, l'un des méthylènes pouvant être substitué par un radical méthyle ou éthyle comme c'est le cas du MPDI (Méthyl Pentaméthylène DiIsocyanate) ;
- comme aliphatique partiellement «néopentylique» partiellement cyclique (cycloaliphatique), l'isophorone diisocyanate (IPDI) ;
- comme aliphatique cyclique (cycloaliphatique) diisocyanate, ceux dérivés du norbornane ;
- les arylènedialcoylènediisocyanates (tels que $OCN\text{-}CH_2\text{-}\Phi\text{-}CH_2\text{-}NCO$ dont une partie ne présente pas de différence essentielle d'avec les aliphatiques à savoir ceux dont la fonction isocyanate est distante des noyaux aromatique d'au moins deux carbones tels que $(OCN\text{-}[CH_2]_t\text{-}\Phi\text{-}[CH_2]_u\text{-}NCO)$ avec t et u supérieur à 1 ;

⇒ ou encore aromatiques tels que le toluylènediisocyanate (toutefois les isocyanates aromatiques se prêtent mal à une mise en émulsion aqueuse).

Par fonction isocyanate aliphatique, l'on entend une fonction isocyanate portée par un carbone d'hybridation $sp^3$.

Les polyisocyanates préférés visés par la technique de l'invention sont ceux dans lesquels au moins une, avantageusement deux, de préférence trois des conditions ci après sont remplies :

- au moins une, avantageusement au moins deux, plus préférentiellement la totalité, des fonctions NCO sont reliées à un squelette hydrocarboné, par l'intermédiaire d'un carbone saturé ($sp^3$), de préférence avec au moins une, plus préférentiellement au moins deux des sous-conditions ci- après :

  - au moins un, avantageusement deux, desdits carbones saturés ($sp^3$) est porteur d'au moins un, avantageusement deux, hydrogène(s),(en d'autres termes, il a été trouvé que l'on obtenait de meilleurs résultats lorsque le carbone porteur de la fonction isocyanate était porteur d'un hydrogène, de préférence de deux hydrogènes) ;
  - au moins un, avantageusement deux, desdits carbones saturés ($sp^3$) sont eux-mêmes portés par un carbone,

avantageusement aliphatique (c'est-à-dire d'hybridation $sp^3$), lui-même porteur d'au moins un, avantageusement deux, hydrogène(s) ; en d'autres termes, il a été trouvé que l'on obtenait de meilleurs résultats lorsque le carbone porteur de la fonction isocyanate n'était en position dite «néopentylique» ;

- tous les carbones par l'intermédiaire desquels les fonctions isocyanates sont reliées au squelette hydrocarboné, sont des carbones saturés ($sp^3$), lesquels sont avantageusement en partie, de préférence en totalité, porteurs d'un hydrogène, de préférence de deux hydrogènes ; en outre, il est avantageux que lesdits carbones saturés ($sp^3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins un, avantageusement deux, hydrogène(s) ; en d'autres termes, il a été trouvé que l'on obtenait de meilleurs résultats lorsque le carbone porteur de la fonction isocyanate n'était pas en position dite «néopentylique» ;
- sont en particulier bien adaptés ceux qui présentent au moins en partie un squelette isocyanurique ou biuret (que ce squelette soit issu d'un seul ou de plusieurs monomères, voir ci-dessous) et plus précisément des structures de type isocyanurate, encore appelées trimères, des structures urétidinediones, encore appelées dimères, des structures biuret ou allophanate ou une combinaison de ce type de structures sur une seule molécule ou en mélange.

Lorsque les polyisocyanates sont relativement lourds c'est à dire qu'ils comportent au moins quatre fonctions isocyanates, le plus souvent de 4 à 6, les deux premières conditions deviennent :

- au moins 1/3, avantageusement 2/3, (de préférence la totalité), des fonctions NCO sont reliées à un squelette hydrocarboné, par l'intermédiaire d'un carbone saturé ($sp^3$) ;
- au moins 1/3, avantageusement 2/3, de préférence la totalité, desdits carbones saturés ($sp^3$) est porteur d'au moins un, avantageusement deux, hydrogène(s). En d'autres termes, il a été trouvé que l'on obtenait de meilleurs résultats lorsque le carbone porteur de la fonction isocyanate était porteur d'un hydrogène, de préférence de deux hydrogènes ; en outre il est avantageux que lesdits carbones saturés ($sp^3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins un, avantageusement deux, hydrogène(s) ; en d'autres termes, il a été trouvé que l'on obtenait de meilleurs résultats lorsque le carbone porteur de la fonction isocyanate n'était en position dite «néopentylique".

Les isocyanates notamment aliphatiques peuvent réagir avec certains des composés anioniques visés par l'invention pour former des anhydrides ces anhydrides sont susceptibles de redonner les composé de formule (I) et dans certain cas réagissent comme des isocyanates masqués ; les réactions de formation de ces anhydrides, qui d'ailleurs peuvent être inhibées par une neutralisation complète des fonctions acides par une base forte, sont de deux types :

- soit élimination d'une molécule d'eau entre deux groupements fonctionnels anioniques et former ainsi une fonction de type E-O-E (c'est-à-dire une séquence pyrophosphorique dans le cas des phosphates) ;
- soit addition de l'hydroxyle des fonctions acides non ou mal neutralisées sur la fonction NCO pour former une fonction de séquence -NH-CO-O-E. Ces composés (anhydrides mixtes entre un acide carbamique et le groupement fonctionnel anionique) sont également visés par la présente invention.

Le premier cas correspond au cas où la première acidité a été imparfaitement neutralisée. Ces produits ont aussi d'excellentes propriétés tensioactives.

Au cours de la recherche qui a mené à la présente invention, il a pu être montré que la présence de molécules (correspondant au concept de solvant réactif) de bas poids moléculaire [c'est-à-dire au plus égale à 700 (2 chiffres significatifs), avantageusement à 600 (2 chiffres significatifs), de préférence à 500 (2 chiffres significatifs)] ne présentant ni structure hexacylique, ni de fonction biuret, ni même uréthanne, pouvait être corrélée à une bonne adhérence. De telles molécules sont des molécules ne présentant qu'au plus trois motifs diamines et sont essentiellement choisies parmi les dimères, les bis-dimères, les monoallophanates des polyméthylènes diisocyanates et les monomères trifonctionnels du type LTI et NTI.

Ainsi avantageusement l'une au moins de ces molécules est présente dans la composition isocyanate a). Au total, ces molécules de bas poids moléculaire représentent une portion allant de 5 à 25%, avantageusement de 7 à 15% en masse de la composition isocyanate a).

Les dimères, les bis-dimères sont préférés et représentent en masse avantageusement de 5 à 20%, de préférence au moins 7%, de la composition a).

La quantité de solvant dans la composition isocyanate représente avantageusement au plus 20% en masse de la composition isocyanate a), de préférence au plus 10%, plus préférentiellement au plus 1 %.

Il est préférable pour des raisons de législation du travail que la quantité de monomère volatil du type hexaméthylène diisocyanate soit au plus égale à 1% en masse de la composition isocyanate a), avantageusement à 0,5%, de préférence à 0,2%, plus préférentiellement à 0,1 %.

Les exemples non limitatifs suivants illustrent l'invention.

Matières premières :

**Composition émulsionnable selon la présente invention**

La composition émulsionnable d'isocyanate selon la présente invention, a été réalisée par addition d'un agent tensioactif (ou émulsifiant) de formule statistique (I) à une composition isocyanate préparée à partir d'hexaméthylène diisocyanate trimérisé de viscosité inférieure d'au plus 1 200 mPa.s et comportant en masse :

8% (± 1%) de dimère vrai;
2% (± 1%) de bis-dimère ;
2% (± 1 %) de biuret ;
55% (± 2%) de trimère vrai.

L'émulsifiant utilisé est de formule statistique (I)
où:

- q représente 0,45 ;
- s et r représentent 5 ;
- p = 1,55;
- $R_1$ et $R_2$ sont des radicaux isotridécyle.
- avec en plus comme impureté 5% en mole de phosphore non ionique (triester correspondant) et 3±2 % en mole d'acide phosphorique

L'amine utilisée pour la neutralisation est la N,N-diméthylcyclohexylamine.
L'acide phosphorique représentent 3±2 % en mole du phosphore présent (en d'autres termes, le phosphore de l'acide phosphorique représente 3±2 % de la totalité du phosphore présent).
Seule, la première acidité des acides phosphorés présents a été neutralisée.
Après addition la composition émulsionnable d'isocyanate comporte 7,5% (± 1 %) en masse de dimère vrai (c'est-à-dire à un seul motif urétidinedione et deux motifs diamine) et 3,5% en masse de composé de formule (I). Elle présente une viscosité de 1 400 mPa.s (NCO = 21,7%)

**Le composé Desmodur® DN**

Il s'agit d'une composition du commerce comportant un taux élevé (au moins 70%) de trimère vrai (c'est-à-dire à un cycle isocyanurate et trois motifs diamine) et qui comporte en outre un tensioactif neutre issu de la condensation entre des oligomères d'isocyanate et un diol qui est un copolymère d'oxydes d'éthylène (46%) et de propylène (54%). La viscosité est de 1 250 mPa.s (NCO= 21,8%). Cette composition est réputée donner de bons résultats.

**La composition à base HDT (produit de trimérisation de l'hexaméthylène diisocyanate)**

L'HDT testé est le produit courant issu de la trimérisation avec moins de 2% de dimère à une viscosité de 2 700 mPa.s, auquel on a ajouté 11 % du produit de formule (i) spécifié ci dessus.
Cette composition est autoémulsionnable.
Viscosité finale 4 300 mPa.s.
NCO = 19%
Pourcentage de tensioactif après addition = 10%

**Test à la spatule**

Le test à la spatule est un test qualitatif dans lequel le composé testé est prélevé du contenant au moyen de la partie plate d'une spatule et est agité dans de l'eau pendant 2 minutes. S'il reste visiblement du produit au bout de la spatule le test est négatif. Ce test d'usage est un bon indicatif de la facilité à mettre en oeuvre.
Tous les tests sont réalisés avec une teneur en composition isocyanate de 4% massique.
Les mesures de granulométrie sont réalisées avec l'appareil (HORIBA LA 910)

**Exemple 1 : mise en émulsion avec données comparatives**

| Produit testé | Test spatule | Isocyanate | | Dispercoll U54 | | Mélange | |
|---|---|---|---|---|---|---|---|
| | | $d_{50}$ médian | $(d_{10}-d_{90})/d_{50}$ | $d_{50}$ | $(d_{10}-d_{90})/d_{50}$ | $D_{50}$ | $(d_{10}-d_{90})/d_{50}$ |
| Invention | + | 21 μ | 0, | 166 nm | 0,48 | 2,7 μ | 16 |
| Desmodur DN | + | 19 μ | 1,6 | | | Bipopulé 22 μ (19%) + 215 nm | 92 |
| HDT trimère usuel viscosité 2700 mPa.s | - | 0,09 μ | 0,845 | | | Bipopulé 14 p (8%) + 250 nm | 0,55 |

**Exemple 2: Collage d'élastomère (chaussures de sport) - Etude comparative d'une composition selon la présente invention avec des compositions isocyanates usuelles**

Le polymère utilisé est le Dispercoll® U54 (voire notice technique en date du lundi 31 janvier 2000). Il s'agit d'une dispersion de polyuréthanne à 50% de polymère sec.

**Composition testée :**

| | |
|---|---|
| Coréactif | |
| Dispercoll U54 | 100,00 g |
| Tafigel PUR 40 (voir notice de fevrier 1998) | 0,47 g |
| Phase isocyanate : | |
| Produit testé | 3,00 g |

**Test d'utilisation pour adhésif**

Les tests sont menés selon la norme DIN EN 1392, les éprouvettes sont séchées pendant 4 jours à température ambiante (23°C). Les résistances à la rupture sont mesurées selon la norme DIN 205/91.
A savoir :

- conditions de réticulation pour les tests de cisaillement, de pelage et de traction 4 jours à température ambiante ;
- conditions de réticulation pour les tests en milieu humide 4 jours à température ambiante ; six heures dans l'eau et une heure de séchage puis test de pelage.

| Produit testé | Pelage : sur CPU sec DIN ENM1392 | Pelage : sur NBR milieu sec |
|---|---|---|
| U 54 seul | 0,56 | 0,18 |
| Avec l'Invention | 1,06 | 0,73 |
| Avec Desmodur® DN | 1, | 0,67 |
| Avec HDT sans tensioactif | 1,1 | 0,55 |
| Avec HDT avec tensioactif | 1,06 | 0,73 |

| Produit testé | Pelage sur C-PUNBR humide | | Pelage sur NBRC-PU humide | |
|---|---|---|---|---|
| | Avant | Après trempage | Avant | Après trempage |
| U 54 seul | | | | |
| Avec l'invention | 1,06 | 0,98 | 0,73 | 0,68 |
| Avec Desmodur® DN | 1, | 0,64 | 0,67 | 0,47 |
| Avec HDT avec tensioactif | 1,06 | 0,67 | 0,73 | 0,5 |

**Exemple 3 Test de peinture (vernis) sur bois**

Le composé selon la présente invention a été mélangé (émulsionné) dans le rapport 7,5/100 avec le mélange de coréactifs suivant.

| | |
|---|---|
| Alberdingk U 915 (voir notice technique d'octobre 1998) | 71 |
| BYK 024 | 0,4 |
| Dowanol DPM | 2,4 |
| Dowanol DPNB | 2,4 |
| Eau desionisée | 19 |
| Drew Plus T 4202 | 1,1 |
| DSX 2000 | 1 |
| Additif (agent mouillant) | 0,7 |
| Lubaprint VP 682 | 2.00 |
| Total | 100,00 |

Les propriétés, de ce coréactif sont indiquées ci-dessous :

| | |
|---|---|
| Solides (%) | 28,39 |
| Viscosité DIN 4 (s) | 21 |
| pH | 8,3 |
| PU Epaississant PU (solide) | 0,4 |

Le vernis (épaisseur de 200 mμ) a été appliqué sur un parquet type puis séché. La dureté König atteint, après séchage (au moins trois jours), un palier de 90 $s^{-1}$ ; valeur similaire à celle du standard utilisé (produit de haute qualité du commerce, utilisé sous une forme dissoute dans un solvant puis émulsionnée),

| Agent agressif du vernis | Durée | Durcisseur standard | Durcisseur selon l'invention |
|---|---|---|---|
| Acide acétique | 1 h | 4,5 | 5 |
| Ethanol 48vol% | 5 h | 5 | 5 |
| Palatinol C(DBP) | 16 h | 5 | 5 |
| Crème | 16 h | 5 | 5 |
| Eau | 16 h | 5 | 5 |
| Lait | 16 h | 5 | 5 |
| Vin rouge | 16 h | 5 | 5 |
| Café | 16 h | 3 | 4 |
| Moutarde | 16 h | 3 | 4 |
| encre sans huile | 16 h | 3 | 3 |
| Acétone | 10 s | 4,5 | 5 |

(suite)

| Agent agressif du vernis | Durée | Durcisseur standard | Durcisseur selon l'invention |
|---|---|---|---|
| Ammoniaque (10% dans l'eau) | 10 min | 5 | 5 |

Cotation de la dégradation

5 : absence de marque ;
4 : léger changement de la brillance ou de la teinte, mais détectable uniquement avec l'aide l'une lumière réfléchie sur la surface du revêtement ou bien marque très légère ;
3 : marque légère détectable sous divers angles de vue;
2 : marque nette sans changement de la structure de la surface du revêtement;
1 : marque forte avec le cas échéant changement ou déstructuration de la structure de surface du revêtement ou bien le papier filtre est attaché à la surface

## Revendications

**1.** Utilisation pour la préparation d'une émulsion pour adhésif d'une composition comportant pour addition successive ou simultanée :

· une composition isocyanate (a) d'une teneur massique en fonction N=C=O comprise entre 10% et 30% (bornes comprises), avantageusement de 15 à 25% (bornes comprises), d'une viscosité au plus égale à 2 500 mPa.s, d'une taille de particule $d_{50}$ d'au plus égale à 25 μm, de préférence d'au plus égale à 22 μm pour un indice de polydispersité au plus égal à 1,5 avantageusement au plus égal à 1,3;
· un agent tensioactif (b) comportant comme constituant principal (c'est-à-dire au moins 50% massique) un composé ou mélange de composés de formule générale moyenne :

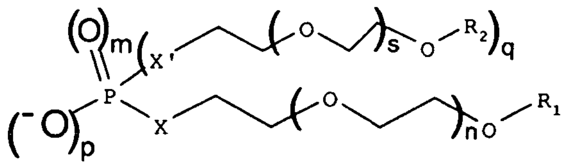

où:

- p représente une valeur entre 1 et 2 (intervalles fermés, c'est-à-dire comprenant les bornes) ;
- m représente zéro ou 1;
- la somme p + m + q est égale à 3 ;
- la somme 1+ p + 2m + q est égale à 3 ou à 5, avantageusement à 5 ;
- X est un oxygène;
- X' est un oxygène;
- n et s ont la même valeur statistique, choisie entre 5 et 30, avantageusement entre 5 et 25, de préférence entre 9 et 20 (intervalles fermés, c'est-à-dire comprenant les bornes) et où $R_1$ et $R_2$, différents ou identiques, sont choisis parmi les radicaux de nature aliphatique sans noyau aromatique, substitués ou non, avantageusement des alcoyles;

• une phase aqueuse de pH compris entre 4 et 9, avantageusement porteuse d'un polymère adhésif en soi connu.

**2.** Utilisation selon la revendication 1, **caractérisée par le fait que** la viscosité de la composition isocyanate est au plus égale à 2 000, avantageusement à 1 500 mPa.s, de préférence à 1 400 mPa.s, plus préférentiellement à 1 200 mPa.s.

**3.** Utilisation selon l'une des revendications 1 et 2, **caractérisée par le fait que** le rapport entre la masse de l'agent b) (numérateur) et la masse de la composition a) (dénominateur), est dans l'intervalle fermé (c'est-à-dire contenant les bornes) allant de 2 à 10%, avantageusement de 3 à 7%.

**4.** Utilisation selon l'une des revendications 1 à 3, **caractérisée par le fait que** la somme p + q est égale à 2.

**5.** Utilisation selon les revendications 1 à 4, **caractérisée par le fait que** ladite composition isocyanate a) comporte au moins 50%, avantageusement 70%, en masse d'oligomères choisis parmi les hétéro- ou homo-oligomères dont au moins un des monomères est un monomère aliphatique, avantageusement dont tous les monomères sont des monomères aliphatiques choisis parmi ceux porteurs d'au moins deux fonctions isocyanates et dont le squelette, sur le trajet le plus court joignant deux fonctions isocyanates comporte au moins un enchaînement polyméthylène d'au moins deux maillons méthylènes $(CH_2)_\pi$ ($\pi \geq 2$), exocyclique lorsque le monomère comporte un cycle.

**6.** Utilisation selon l'une des revendications 1 à 5, **caractérisée par le fait que** ladite composition isocyanate a) comporte une portion de solvant réactif comportant au moins une molécule choisie parmi les dimères, les bis-dimères, les monoallophanates, des polyméthylènes diisocyanates et les monomères bi-, tri-, voire tétra-fonctionnels, de masse moléculaire au moins égale à 200.

**7.** Utilisation selon la revendication 6, **caractérisée par le fait que** ladite portion représente une portion allant de 5 à 20% en masse de la composition isocyanate a).

**8.** Utilisation selon l'une des revendications 6 et 7, **caractérisée par le fait que** les dimères et les bis-dimères représentent en masse avantageusement de 5 à 20%, de préférence au moins 7%, de la composition a).

**9.** Composition pour adhésif **caractérisée par le fait qu'**elle comporte pour addition successive ou simultanée :

- une composition isocyanate a) d'une teneur massique en fonction N=C=O comprise entre 10% et 30% (bornes comprises), avantageusement de 15 à
- une composition isocyanate a) d'une teneur massique en fonction N=C=O comprise entre 10% et 30% (bornes comprises), avantageusement de 15 à 25% (bornes comprises), d'une viscosité au plus égale à 2 500 mPa.s, d'une taille de particule $d_{50}$ d'au plus égale à 25 μm, de préférence d'au plus égale à 22 μm pour un indice de polydispersité au plus égal à 1,5 avantageusement au plus égal à 1,3, cette composition comprenant une portion allant de 5 à 20% en masse de solvant réactif comportant au moins une molécule choisie parmi les dimères, les bis-dimères, les monoallophanates, des polyméthylènes diisocyanates et les monomères bi-, tri-, voire tétra-fonctionnels, de masse moléculaire au moins égale à 200;
- un agent tensioactif b) comportant comme constituant principal (c'est-à-dire au moins 50% massique) un composé ou mélange de composés de formule générale moyenne :

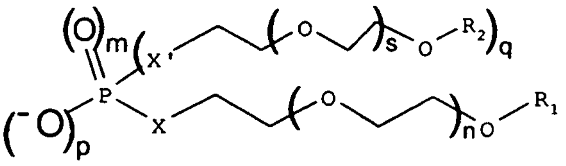

où:

- p représente une valeur entre 1 et 2 (intervalles fermés, c'est-à-dire comprenant les bornes) ;
- m représente 0 ou 1 ;
- la somme p+m+q est égale à 3 ;
- la somme 1+p+2m+q est égale à 3 ou à 5, avantageusement à 5 ;
- X est un oxygène ;
- X' est un oxygène ;
- n et s ont la même valeur statistique, choisie entre 5 et 30, avantageusement entre 5 et 25, de préférence entre 9 et 20 (intervalles fermés, c'est-à-dire comprenant les bornes);

- $R_1$ et $R_2$, différents ou identiques, sont choisis parmi les radicaux de nature aliphatique sans noyau aromatique,

substitués ou non, avantageusement des alcoyles.

## Claims

1. Use for the preparation of an emulsion for adhesive of a composition comprising, for successive or simultaneous addition:

• an isocyanate composition (a) with a mass content of N=C=O function of between 10% and 30% (limits inclusive) and advantageously from 15% to 25% (limits inclusive) and with a viscosity of not more than 2500 mPa.s, and with a particle size $d_{50}$ of not more than 25 $\mu$m and preferably not more than 22 $\mu$m, for a polydispersity index of not more than 1.5, and advantageously not more than 1.3;
• a surfactant (b) comprising as main constituent (i.e. at least 50% by mass) a compound or a mixture of compounds of mean general formula:

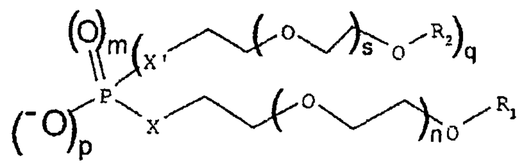

in which:

- p represents a value between 1 and 2 (closed intervals, i.e. including the limits);
- m represents zero or 1;
- the sum p+m+q is equal to 3;
- the sum 1+p+2m+q is equal to 3 or 5, advantageously 5;
- X is an oxygen;
- X' is an oxygen;

• - n and s have the same statistical value, chosen between 5 and 30, advantageously between 5 and 25 and preferably between 9 and 20 (closed intervals, i.e. including the limits) in which $R_1$ and $R_2$, which are different or identical, are chosen from radicals of aliphatic nature with no aromatic nucleus, substituted or unsubstituted, advantageously alkyls;
• an aqueous phase with a pH of between 4 and 9, advantageously bearing an adhesive polymer that is known per se.

2. Use according to Claim 1, **characterized in that** the viscosity of the isocyanate composition is not more than 2000, advantageously not more than 1500 mPa.s, preferably not more than 1400 mPa.s and more preferentially not more than 1200 mPa.s.

3. Use according to either of Claims 1 and 2, **characterized in that** the ratio between the mass of the agent b) (numerator) and the mass of the composition a) (denominator) is within the closed interval (i.e. including the limits) ranging from 2% to 10% and advantageously from 3% to 7%.

4. Use according to one of Claims 1 to 3, **characterized in that** the sum p+q is equal to 2.

5. Use according to Claims 1 to 4, **characterized in that** said isocyanate composition a) comprises at least 50% and advantageously 70% by mass of oligomers chosen from hetero- and homooligomers, at least one of the monomers of which is an aliphatic monomer, and advantageously all of the monomers of which are aliphatic monomers chosen from those bearing at least two isocyanate functions and of which the skeleton, on the shortest trajectory connecting two isocyanate functions, comprises at least one polymethylene sequence of at least two methylene chain units $(CH_2)_\pi$ ($\pi \geq 2$), which is exocyclic when the monomer comprises a ring.

6. Use according to one of Claims 1 to 5, **characterized in that** said isocyanate composition a) comprises a portion of reactive solvent comprising at least one molecule chosen from dimers, bis-dimers, monoallophanates, polymethylene diisocyanates and di-, tri- or even tetrafunctional monomers with a molecular mass at least equal to 200.

**7.** Use according to Claim 6, **characterized in that** said portion represents a portion ranging from 5% to 20% by mass of the isocyanate composition a).

**8.** Use according to either of Claims 6 and 7, **characterized in that** the dimers and the bis-dimers represent by mass advantageously from 5% to 20% and preferably at least 7% of the composition a).

**9.** Composition for adhesive, **characterized in that** it comprises, for successive or simultaneous addition:

• an isocyanate composition a) with a mass content of N=C=O function of between 10% and 30% (limits inclusive) and advantageously from 15% to 25% (limits inclusive) and with a viscosity of not more than 2500 mPa.s, with a particle size $d_{50}$ of not more than 25 μm and preferably not more than 22 μm, for a polydispersity index of not more than 1.5, and advantageously not more than 1.3, this composition comprising a portion ranging from 5% to 20% by mass of reactive solvent comprising at least one molecule chosen from dimers, bis-dimers, monoallophanates, polymethylene diisocyanates and di-, tri- or even tetrafunctional monomers with a molecular mass at least equal to 200;
• a surfactant b) comprising as main constituent (i.e. at least 50% by mass) a compound or a mixture of compounds of mean general formula:

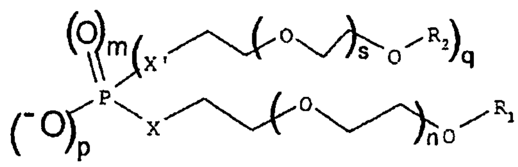

in which:

- p represents a value between 1 and 2 (closed intervals, i.e. including the limits);
- m represents 0 or 1;
- the sum p+m+q is equal to 3;
- the sum 1+p+2m+q is equal to 3 or 5, advantageously 5;
- X is an oxygen;
- X' is an oxygen;
- n and s have the same statistical value, chosen between 5 and 30, advantageously between 5 and 25 and preferably between 9 and 20 (closed intervals, i.e. including the limits);
- $R_1$ and $R_2$, which are different or identical, are chosen from radicals of aliphatic nature with no aromatic nucleus, substituted or unsubstituted, advantageously alkyls.

## Patentansprüche

**1.** Verwendung zur Herstellung einer Emulsion für Klebstoffe von einer Zusammensetzung, die für die aufeinanderfolgende oder gleichzeitige Zugabe umfasst:

eine Isocyanat-Zusammensetzung (a) mit einem Massegehalt an Funktionen N=C=O zwischen einschließlich 10 % und 30 % (Grenzwerte eingeschlossen), vorteilhafterweise von 15 % bis 25 % (Grenzwerte eingeschlossen), mit einer Viskosität von höchstens gleich 2500 mPa.s, einer Größe der Teilchen $d_{50}$ von höchstens gleich 25 μm, vorzugsweise von höchstens gleich 22 μm für einen Index der Polydispersität von höchstens gleich 1,5, vorteilhafterweise von höchstens gleich 1,3;
ein oberflächenaktives Mittel (b), umfassend als Hauptbestandteil (das heißt, mindestens 50 Masse-%) eine Verbindung oder eine Mischung von Verbindungen der mittleren allgemeinen Formel:

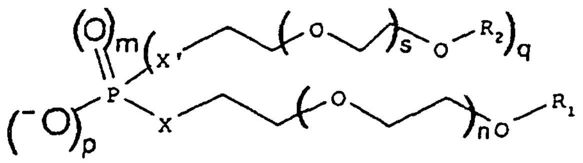

in der

- p einen Wert zwischen 1 und 2 darstellt (geschlossene Intervalle, das heißt, umfassend die Grenzwerte);
- m null oder 1 darstellt;
- die Summe p + m + q gleich 3 ist;
- die Summe 1 + p + 2m + q gleich 3 oder 5 ist, vorteilhafterweise 5;
- X ein Sauerstoff darstellt ;
- X' ein Sauerstoff darstellt;
- n und s den gleichen statistischen Wert besitzen, ausgewählt zwischen 5 und 30, vorteilhafterweise zwischen 5 und 25, vorzugsweise zwischen 9 und 20 (geschlossene Intervalle, das heißt, umfassend die Grenzwerte) und worin $R_1$ und $R_2$, gleich oder verschieden, unter den Resten aliphatischer Beschaffenheit ohne aromatische Kerne, substituiert oder nicht, vorteilhafterweise den Alkylen ausgewählt werden;

eine wässrige Phase mit einem pH-Wert zwischen 4 und 9, vorteilhafterweise als Träger eines an sich bekannten adhäsiven Polymers.

2. Verwendung nach Anspruch 1, **dadurch gekennzeichnet, dass** die Viskosität der Isocyanat-Zusammensetzung höchstens gleich 2000 mPa.s, vorteilhafterweise 1500 mPa.s, vorzugsweise 1400 mPa.s und noch mehr bevorzugt 1200 mPa.s beträgt.

3. Verwendung nach einem der Ansprüche 1 und 2, **dadurch gekennzeichnet, dass** das Verhältnis zwischen der Masse des Mittels b) (Zähler) und der Masse der Zusammensetzung a) (Nenner) in dem geschlossenen Intervall (das heißt, enthaltend die Grenzwerte) liegt, das von 2 % bis 10 %, vorteilhafterweise von 3 % bis 7 % reicht.

4. Verwendung nach einem der Ansprüche 1 bis 3, **dadurch gekennzeichnet, dass** die Summe p + q gleich 2 ist.

5. Verwendung nach Anspruch 1 bis 4, **dadurch gekennzeichnet, dass** die genannte Isocyanat-Zusammensetzung a) mindestens 50 Masse-%, vorteilhafterweise 70 Masse-% an Oligomeren umfasst, ausgewählt unter den Hetero- oder Homo-Oligomeren, von denen mindestens eines der Monomeren ein aliphatisches Monomer ist, vorteilhafterweise alle Monomeren aliphatische Monomeren sind, ausgewählt unter denjenigen, die Träger von mindestens zwei Isocyanat-Funktionen sind und deren Gerüst, über die kürzeste Strecke, die zwei Isocyanat-Funktionen miteinander verbinden, mindestens eine Polymethylenverkettung von mindestens zwei Methylengliedern $(CH_2)_\pi$ (n ≥ 2) umfasst, exozyklisch, wenn das Monomer einen Zyklus umfasst.

6. Verwendung nach einem der Ansprüche 1 bis 5, **dadurch gekennzeichnet, dass** die genannte Isocyanat-Zusammensetzung a) einen Teil von reaktivem Lösungsmittel enthält, umfassend mindestens ein Molekül, ausgewählt unter den Dimeren, den Bis-Dimeren, den Monoallophanaten, den Polymethylen-diisocyanaten und den bi-, tri-, sogar tetra-funktionellen Monomeren mit einer Molekularmasse von mindestens gleich 200.

7. Verwendung nach Anspruch 6, **dadurch gekennzeichnet, dass** der genannte Teil ein Teil darstellt, das von 5 Masse-% bis 20 Masse % der Isocyanat-Zusammensetzung a) reicht.

8. Verwendung nach einem der Ansprüche 6 und 7, **dadurch gekennzeichnet, dass** die Dimeren und die Bis-Dimeren vorteilhafterweise 5 Masse-% bis 20 Masse %, vorzugsweise mindestens 7 Masse-% der Zusammensetzung a) darstellen.

9. Zusammensetzung für Klebstoffe, **dadurch gekennzeichnet, dass** sie für die aufeinanderfolgende oder gleichzeitige Zugabe umfasst:

eine Isocyanat-Zusammensetzung (a) mit einem Massegehalt an Funktionen N=C=O zwischen einschließlich 10 % und 30 % (Grenzwerte eingeschlossen), vorteilhafterweise von 15 % bis 25 % (Grenzwerte eingeschlossen), mit einer Viskosität von höchstens gleich 2500 mPa.s, einer Größe der Teilchen $d_{50}$ von höchstens gleich 25 μm, vorzugsweise von höchstens gleich 22 μm für einen Index der Polydispersität von höchstens gleich 1,5, vorteilhafterweise von höchstens gleich 1,3, wobei diese Zusammensetzung einen Teil enthält, der von 5 Masse-% bis 20 Masse-% von reaktivem Lösungsmittel reicht, umfassend mindestens ein Molekül, ausgewählt unter den Dimeren, den Bis-Dimeren, den Monoallophanaten, den Polymethylen-diisocyanaten und den bi-, tri-, sogar tetra-funktionellen Monomeren mit einer Molekularmasse von mindestens gleich 200;
ein oberflächenaktives Mittel (b), umfassend als Hauptbestandteil (das heißt, mindestens 50 Masse-%) eine Verbindung oder eine Mischung von Verbindungen der mittleren allgemeinen Formel:

in der

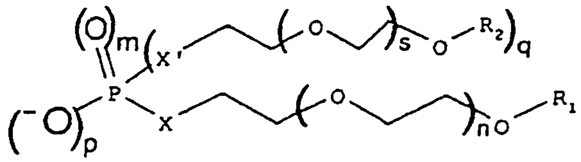

- p einen Wert zwischen 1 und 2 darstellt (geschlossene Intervalle, das heißt, umfassend die Grenzwerte);
- m null oder 1 darstellt;
- die Summe p + m + q gleich 3 ist;
- die Summe 1 + p + 2m + q gleich 3 oder 5 ist, vorteilhafterweise 5;
- X ein Sauerstoff darstellt;
- X' ein Sauerstoff darstellt;
- n und s den gleichen statistischen Wert besitzen, ausgewählt zwischen 5 und 30, vorteilhafterweise zwischen 5 und 25, vorzugsweise zwischen 9 und 20 (geschlossene Intervalle, das heißt, umfassend die Grenzwerte);
- $R_1$ und $R_2$, gleich oder verschieden, unter den Resten aliphatischer Beschaffenheit ohne aromatische Kerne, substituiert oder nicht, vorteilhafterweise den Alkylen ausgewählt werden.